Europäisches Patentamt

European Patent Office

Office européen des brevets

(11) Veröffentlichungsnummer: **0 304 793 B1**

## EUROPÄISCHE PATENTSCHRIFT

(45) Veröffentlichungstag der Patentschrift: **28.10.92**

(51) Int. Cl.5: **G01B 11/06**

(21) Anmeldenummer: **88113388.8**

(22) Anmeldetag: **18.08.88**

(54) **Vorrichtung zur Bestimmung der Dicke von Schichtträgern.**

(30) Priorität: **28.08.87 DE 3728704**

(43) Veröffentlichungstag der Anmeldung:
**01.03.89 Patentblatt 89/09**

(45) Bekanntmachung des Hinweises auf die
Patenterteilung:
**28.10.92 Patentblatt 92/44**

(84) Benannte Vertragsstaaten:
**DE FR GB IT**

(56) Entgegenhaltungen:

| | |
|---|---|
| EP-A- 0 211 654 | DE-A- 2 254 910 |
| DE-A- 2 724 919 | DE-A- 2 907 620 |
| DE-A- 2 909 400 | DE-A- 2 928 997 |
| DE-A- 2 935 716 | DE-A- 3 136 887 |
| DE-A- 3 149 709 | DE-A- 3 248 157 |
| DE-B- 1 623 196 | DE-B- 2 333 326 |
| DE-B- 2 355 185 | DE-U- 8 202 548 |
| US-A- 3 956 630 | |

ISA TRANSACTIONS, Band 27, Nr. 1, 1988,
Seiten 31-42, Research Triangle Park, NC,
US; P. CIELO et al.: "On-Line Electro-Optical
Instrumentation for continuous Quality Control of Manufactured Sheets"

ADVANCES IN INSTRUMENTATION, Band 42,

Teil 3, 1987, Seiten 1601-1614, Research Triangle Park, NC, US; P. CIELO et al.: "On-Line
Electro-Optical Instrumentation for Continuous Quality Control of Manufactured Sheets"

(73) Patentinhaber: **BASF Magnetics GmbH**
**Dynamostrasse 3**
**W-6800 Mannheim 1(DE)**

(72) Erfinder: **Zierl, Richard, Dr.**
**Flurstrasse 21**
**W-8031 Eichenau(DE)**
Erfinder: **Kreuzer, Erwin, Dipl.-Ing.**
**Goethering 56**
**W-8018 Grafing(DE)**
Erfinder: **Zuckermayr, Alfred**
**Gerhart-Hauptmann-Ring, 8**
**W-8000 München 83(DE)**

(74) Vertreter: **Münch, Volker et al**
**BASF Aktiengesellschaft Patentabteilung-C6**
**ZSP/A**
**W-6700 Ludwigshafen(DE)**

EP 0 304 793 B1

**Beschreibung**

Die Erfindung betrifft eine Vorrichtung zur on-line-Messung der Dicke von Schichtträgern mit opto-elektronischen Mitteln, bestehend aus einer Lichtquelle zur Emission modulierten Lichtes, einem Fotoempfänger zur Registrierung des vom Schichtträger durchgelassenen Lichtes von der Lichtquelle, wobei sich im Verwendungsfall der Schichttrager bewegbar zwischen Lichtquelle und Fotoempfänger befindet, einer Auswerteelektronik zur Bestimmung der Dicke des Schichtträgers aus dem von dem Fotoempfänger registrierten Signal, wobei der Schichtträger im sichtbaren Wellenlängengebiet transparent sein soll und im UV-Bereich eine starke Absorption aufweisen soll.

Bei der Herstellung fotografischer Materialien oder magnetischer Aufzeichnungträger werden als Schichtträger vorzugsweise flexible Folien bestehend beispielsweise aus Cellulosetriacetat oder aus Polyethylentherephthalat verwendet. Dabei ist es erforderlich, die Folienbahnen sowohl vor als auch nach der Beschichtung auf die Schichtdicke sowie die Ebenheit und die Beschaffenheit ihrer Oberfläche zu überprüfen, da Schichtdickenschwankungen oder Oberflächenfehler bekannterweise sowohl die Aufzeichnungs- als auch die Wiedergabequalität der Aufzeichnungträger erheblich beeinflussen. Derartige Kontrollen werden gewöhnlich stichprobenweise durchgeführt, beispielsweise Schichtdickenmessungen mit mechanischen Methoden oder Oberflächenuntersuchungen mit interferenzoptischen Methoden.

In den DE-OS 27 24 919, 29 09 400, 29 35 716, 31 49 709 und 32 48 157 wird Infrarotlicht zur Schichtdickenmessung verwendet, entweder durch Transmissions- oder Reflexions-oder Interferenzmessung. Die DE 16 23 196 schlägt polarisiertes Infrarotlicht vor und entspricht, bis auf einen unterschiedlichen Wellenlängenbereich, der gattungsgemäßen Vorrichtung. Die DE 31 36 887 benutzt eine Interferometeranordnung als Meßmethode. In der DE 29 07 620 wird vorgeschlagen, der zu messenden Schicht einen fluoreszierenden Stoff beizumischen und dann das Fluoreszenzlicht als Maß für die Schichtdicke zu messen. In der DE 23 33 326 wird das Meßlicht in einer Anzahl von Lichtbündeln aufgespalten, die eine Folie durchstrahlen und so eine Schichtdickenmessung an mehreren Stellen ermöglichen. In der DE 23 55 185 und der EP 0 211 654 wird Laserlicht zur Schichtdickenmessung vorgeschlagen. In der erstgenannten Schrift wird der Laserstrahl nacheinander senkrecht auf eine Bezugsebene und auf das Meßobjekt gerichtet und die Differenzmessung als Maß für die Schichtdicke verwertet. In der letztgenannten Schrift wird die Schichtdicke dadurch bestimmt, daß die zu messende Folie über eine Rolle geführt wird, der gegenüber eine Kante angeordnet ist, so daß der dadurch entstehende Spalt ein Maß für die Schichtdicke ist. In der DE 22 54 910 wird beschrieben, daß ein Langzeitdrift der Meßanordnung dadurch vermieden werden kann, daß das Meßlicht geteilt wird und ein Teil des Lichtes als Vergleichsstrahlengang Lichtschwankungen eliminiert. Aus der DE 29 28 997 ist die Verwendung modulierten Lichtes zur Schichtdickenmessung bekannt.

Die US 3 956 630 beschreibt ein Verfahren zur Messung des Schichtauftrags auf Papierbahnen, bei dem der Beschichtungsmasse eine fluoreszierende Substanz zugesetzt wird, die Bahn mit UV-Licht beleuchtet und das remittierte Fluoreszenzlicht gemessen wird. Eine ähnliche Anordnung, jedoch ohne fluoreszierende Substanz beschreibt das DE-GM 82 02 548.

Die beschriebenen Meßanordnungen sind jedoch nicht für On-line-Messungen an Folienbahnen, die in einer Gießvorrichtung mit hoher Geschwindigkeit ab- und aufgerollt werden, geeignet, oder sie sind zu kompliziert oder aber sie geben keine genügende Genauigkeit. Daher bestand die Aufgabe, eine Meßvorrichtung für die Schichtdicke von flexiblen Schichtträgern zu finden, die
- on-line die Dicke sowie Dickenschwankungen eines bewegten Schichtträgers mißt
- über die gesamte Bahnbreite des Schichtträgers Meßergebnisse liefert
- gleichzeitig ausreichend kleine Meßfelder besitzt, um auch Fehler mit kleinen Dimensionen festzustellen
- die Meßergebnisse gleichzeitig registriert, so daß ein Fehler lokalisiert werden kann
- auch bei Langzeitmessung konstante Ergebnisse gibt.

Erfindungsgemäß wurde die Aufgabe gelöst mit einer Vorrichtung mit den Anspruch 1 genannten Merkmalen. Weitere Einzelheiten der Erfindung gehen aus den Unteransprüchen, der Beschreibung und den Zeichnungen hervor.

Die Erfindung wird nun anhand der Zeichnungen näher erläutert und zwar zeigt

Figur 1          ein Schema der erfindungsgemäßen Vorrichtung
Figur 2 - 3      Varianten der erfindungsgemäßen Vorrichtung
Figur 4          ein Prinzipschaltbild der erfindungsgemäßen Auswerteelektronik bezüglich Nullpunkts- und Verstärkungsregelung
Figur 5          ein Prinzipschaltbild der Signalverarbeitungsstufen.

Üblicherweise sind die für magnetische oder fotografische Zwecke verwendeten Schichtträger wie

2

beispielsweise Polyethylenterephthalat im sichtbaren Wellenlängengebiet transparent, zeigen jedoch im UV-Bereich, vor allem unterhalb von 300 Nanometer Wellenlänge eine starke Absorption. Es wurde nun gefunden, daß bei Anwendung von Licht in diesem Wellenlängengebiet eine zuverlässige Schichtdickenmessung möglich ist. Dabei liegt das durchtretende Licht mindestens teilweise in diesem Wellenlängenbereich, in dem der Schichtträger eine hohe Absorption hat und wird von einem in diesem Wellenlängenbereich empfindlichen Fotoempfänger registriert, der es in ein elektrisches Signal umformt, welches nach einmaliger Kalibrierung der Vorrichtung ein Absolutmaß für die Schichtdicke liefert. Dabei wird vorzugsweise on-line über die gesamte Bahnbreite des Schichtträgers gemessen.

1. Optische Anordnung

Als Lichtquellen können verwendet werden:
- Laser, die direkt oder durch Frequenzvervielfältigung Strahlung im UV-Bereich erzeugen, oder
- Entladungslampen mit Strahlungsanteilen im UV-Bereich von 300 Nanometer und kürzer. Bei diesen Lichtquellen sind durch Filter längerwellige Strahlenanteile auszufiltern.

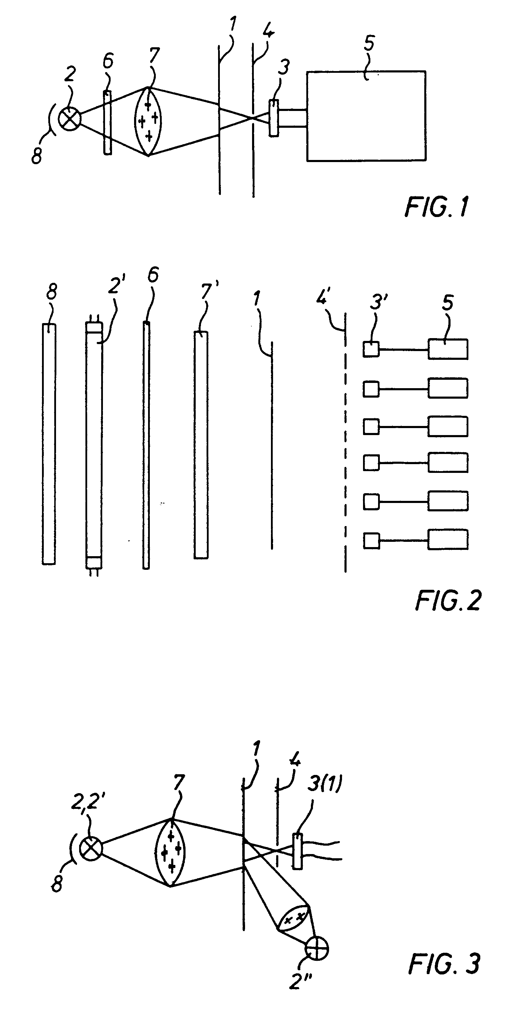

Wie aus Figur 1 zu erkennen, wird das von der Lichtquelle (2) kommende Strahlenbündel durch einen Kondensor (7) parallel oder leicht konvergent ausgerichtet und durchstrahlt den Schichtträger (1). Das durchtretende Licht wird von einem Fotoempfänger (3), beispielsweise einer Silicium-Fotodiode oder einem SEV aufgefangen. Das entsprechende Strombeziehungsweise Spannungssignal wird einer später zu erläuternden Auswerteelektronik (5) zugeführt. Vor dem Empfänger (3) kann ein optisches Filter, das nur UV-Licht durchläßt, angeordnet sein, um beispielsweise Einfluß von Raumlicht auszuschalten. Weiterhin ist vor dem Empfänger eine Lochblende (4) angeordnet, welche bewirkt, daß unabhängig von kleinen Abstandsänderungen des Schichtträgers (1) zum Fotoempfänger (3) nur Teile des homogen ausgeleuchteten auf der der Lichtquelle entgegengesetzten Schichtträgerseite nahezu diffus strahlenden Meßflecks von dem Fotoempfänger gesehen werden und Abstandsschwankungen des Schichtträgers somit nicht in die Messung eingehen. Zwischen Lichtquelle und Kondensor befindet sich bei Verwendung von Entladungslampen ein Filter (6), welches nur UV-Licht im oben genannten Wellenlängenbereich durchläßt.

Da nun die bevorzugte Aufgabe darin besteht, die Schichtdicke einer in einer Gießvorrichtung laufenden Schichtträgerbahn über die gesamte Breite on-line zu messen, können entweder Einzelanordnungen von punktförmigen Lichtquellen und Empfängern oder als Lichtquelle eine röhrenförmige Niederdruckquecksilberdampfentladungslampe zum Beispiel Ent keimungs- und Ozonstrahler (HNS-Strahler) (2'), welche quer zur Bahnlaufrichtung angeordnet sind, verwendet werden (Figur 2), so daß die gesamte Bahnbreite von dieser Lampe von oben oder von unten bestrahlt wird. Das Licht kann durch Reflektoren (8), zentrische Linsen (7') oder bei röhrenförmiger Lichtquelle, Reflektor oder Zylinderlinse parallel oder konvergent auf die Bahn gerichtet werden, so daß auf diese Weise der Schichtträger über die gesamte Bahnbreite beleuchtet wird. Der durchtretende Lichtstrom wird von einer Anzahl Fotoempfänger (3'), welche auf der entgegengesetzten Seite des Schichtträgers angeordnet sind, aufgefangen. Die Anzahl der Fotoempfänger bestimmt die Abtastdichte, die bis zur lückenlosen Erfassung der gesamten Bahnbreite des Schichtträgers ausgedehnt werden kann.

Zur Bestimmung der Schichtdicke aus des am Empfänger (3) gemessenen Signal kann folgende mathematische Überlegung angestellt werden:

Die Transparenz eines Materials ist definiert als

$$T = \frac{\text{durchgehender Lichtstrom } \phi d}{\text{auftreffender Lichtstrom } \phi a}$$

Außerdem gilt

Dichte $D = \log \frac{1}{T} \sim$ Schichtdicke d ( Lambertschus gesetz)

$$\frac{1}{\phi d} = \frac{1}{T \cdot \phi a}$$

$$\log \frac{1}{\phi d} = \log \frac{1}{T} + \log \frac{1}{\phi a} = D + \log \frac{1}{\phi a}$$

$$\log \frac{1}{\phi d} = x \cdot d + \log \frac{1}{\phi a} = - \log \phi d$$

Das logarithmierte Signal ist also ein Maß für die zu messende Dicke d. des Schichtträgers.

Als Lichtquelle kann eine Xenon-Lampe 150 H oder 250 W eingesetzt werden. Diese Lampen können mit moduliertem Gleichstrom betrieben werden, so daß sie frequenzmoduliertes Licht erzeugen. Werden Lampentypen (zum Beispiel Quecksilberhochdrucklampen), deren Lichtstrom sich durch den Versorgungsstrom nicht modulieren läßt, verwendet, ist das Licht mechanisch, zum Beispiel durch eine drehbare Lochblende, zu modulieren.

Frequenzmoduliertes Licht ist notwendig, um durch Ausfilterung der modulierten Wellenlänge im Elektronikteil nur das Nutzsignal und keine Störanteile zu erhalten.

Die zu wählende Modulationsfrequenz hängt von der im on-line-Betrieb vorgegebenen Foliendurchlaufgeschwindigkeit und der erwarteten Ortsauflösung in Laufrichtung ab. Bei Verwendung von nicht mit Gleichspannung zu betreibenden Entladungslampen ist die Modulationsfrequenz die Netzfrequenz. Bei Verwendung von entsprechendem Generatorstrom kann diese höher als 50 Hz gewählt werden. Die Ortsauflösung in Laufrichtung des Schichtträgers hängt von der Abtastgröße, der Geschwindigkeit und der Modulationsfrequenz ab.

## 2. Funktionsbeschreibung der Elektronik

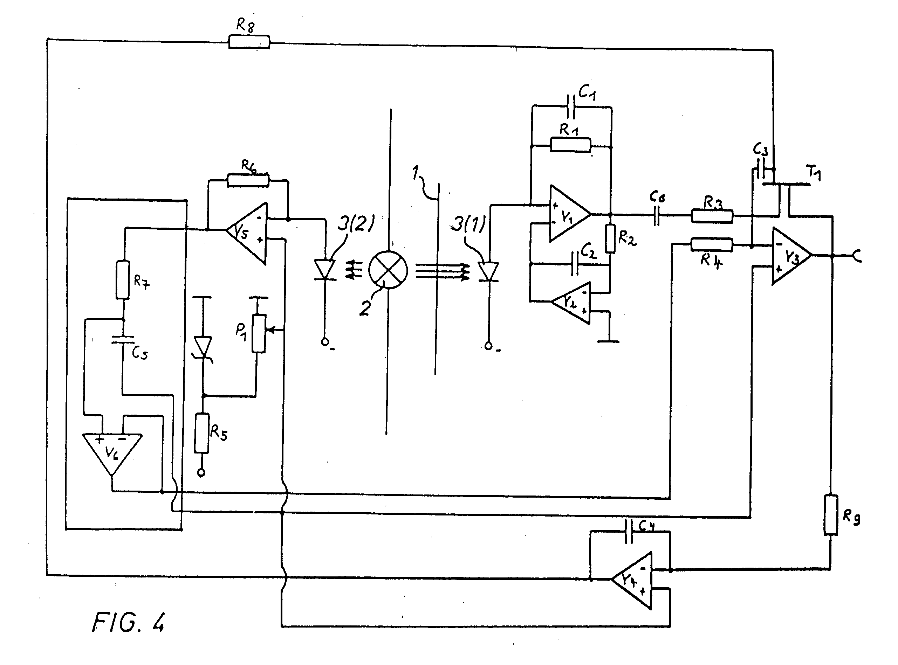

Die Bewertung des am Empfänger (3) entstehenden Signals geschieht durch die in Figur 4 dargestellte Prinzipschaltung.

Der Fotoempfänger 3(1) (entweder UV-empfindliches Silizium-Element oder UV-empfindlicher Foto-Multiplier) speist sein Stromsignal, das dem durch den Prüfling hindurch tretenden Licht proportional ist, in den Eingangsverstärker V1 ein.

Die Prinzipskizze Figur 4 bezieht sich auf die Verwendung einer Fotodiode. Bei Verwendung eines Multipliers ist eine Spannungs-Stromwandlung vorzunehmen, um die beschriebene Schaltung weiter verwenden zu können.

### 2.1 Null-Punkt-Regelung

Der Eingangsverstärker V1 bildet mit dem Integrationsverstärker V2 zusammen ein Null-Punkt Regelglied. Das heißt, die Ausgangsspannung von V1 wird unabhängig vom Ruhestrom durch 3(1) auf Null gehalten. Dies wird dadurch erreicht, daß bei einer von Null abweichenden Ausgangsspannung von V1 die Ausgangsspannung an V2 sich solange ändert, bis die Spannungsdifferenz der beiden Eingänge von V1 gegen Null geht. Die Ausgangsspannung von V1 beträgt dann auch Null. Der Integrationsvorgang ist beendet. Der eingestellte Zustand ist stabil, da die Integrationsspannung (V2) durch geringstes Abdriften des Ausgangs V1 von Null sofort wieder nachgestellt wird. R2 und C2 bilden die Integrationszeitkonstante. Diese ist so zu wählen, daß die Modulationsfrequenz voll übertragen wird.

### 2.2 Einstellung des Arbeitspunktes des Fotoempfängers 3(1)

Um den Empfänger im Bereich der Amplitude des Modulationssignals und des überlagerten Meßsignals linear betreiben zu können, ist es notwendig, den Arbeitspunkt in den linearen Teil der Kennlinie Lichtstrom/Empfängerstrom zu legen. Dabei nuß bei einem optisch sehr dichten Schichtträger die durchstrahlende Lichtquelle (2) einen hohen Lichtstrom aussenden, um den die Modulation tragenden Gleichlichtpegel für die Arbeitspunkteinstellung des Fotoempfängers 3(1) zu erhalten. Dies kann Probleme wegen unzulässiger Erwärmung des Schichtträgers (1) schaffen. Dieses Problem kann dadurch umgangen werden, indem, wie in Figur 3 dargestellt, auf der der Lichtquelle (2) gegenüberliegenden Empfängerseite eine Gleichlichtquelle (2″) so angeordnet ist, daß das von ihr ausgesandte Licht den Schichtträger (1) beleuchtet und daß das rückgestreute oder reflektierte Licht sich mit dem durchstrahlten Licht der Lichtquellen (2, 2′) mischt und den oder die Fotoempfänger 3(1) trifft. Falls es aus geometrischen Gründen möglich ist, kann selbstverständlich die Lichtquelle (2″) auch direkt den Fotoempfänger 3(1) beleuchten. Die Intensität der Gleichlichtquelle (2″) wird so geregelt, daß der Fotoempfänger 3(1) im linearen Bereich arbeitet. Auf diese Weise kann die Intensität der Lichtquelle (2, 2′) erheblich reduziert werden. Da die Lichtquelle (2″) Gleichlicht aussendet, wird durch die bereits geschilderte Ausfilterung des modulierten Lichts (2, 2′) im Elektronikteil nur das Nutzsignal erhalten.

### 2.3 Verstärkungsregelung

V3 bildet zusammen mit dem Feldeffekttransistor T1 eine weitere Regelstufe. Hier werden über den als steuerbaren Rückkopplungswiderstand benützten Transistor Lichtschwankungen der Lichtquelle durch Verstärkungsänderungen ausgeglichen.

Ein Teil des von der Lampe erzeugten Lichtstroms wird auf den Empfänger 3(2) geleitet. Mit Potentiometer P1 wird der Arbeitspunkt von V5 eingestellt. Bei eingebrannter Lampfe sind am Ausgang von V5 0 V einzustellen. Die Arbeitspunktspannung (durch P1) liegt auch am nicht invertierenden Eingang von V3. Die Eingangsspannung am invertierenden Eingang von V3 über R4 ist die Ausgangsspannung von V5 (Ausgangszustand O V).

Dieser Ausgangsspannung ist bei Modulation des Lampenstroms die Modulationsspannung symmetrisch überlagert. Da für die Weiterverarbeitung als Regelgröße nur der Gleichspannungsanteil benötigt wird, wird mit dem Integrationsglied R7, C5 der Wechselspannungsanteil eliminiert. V6 bildet eine Impedanzustufe, um das Signal niederohmig an R4 V3 zu bringen.

Dieses in Figur 4 links eingerahmt dargestellte Schaltungsteil kann bei mechanischer Zerhackung des Lichts der Lichtquelle 2 entfallen.

Am nicht invertierenden Eingang von V4 liegt ebenfalls die mit P1 eingestellte Arbeitspunktspannung. Die Ausgangsspannung des Integrationsverstärkers V4 wird sich nun solange einregeln, bis sie über den als Stellwiderstand verwendeten Transistor T1 die Ausgangsspannung von V3 soweit nachgeschoben hat, daß an den beiden Differenzeingängen von V4 Spannungsgleichheit herrscht. Das heißt, die Ausgangsgleichspannung von V3 entspricht der Arbeitspunktspannung.

Ändert sich nun der Fotostrom von 3(2) durch Änderung des Lichtstroms, so ändert sich die Ausgangsspannung von V5. Sie wird von 0 verschieden. Die Ausgangsspannung von V3 würde sich mit umgekehrten Vorzeichen um denselben Betrag ändern, wenn nicht über den Integrationsverstärker V4 die Verstärkung von V3 mit T1 so ausgeglichen würde, daß die Ausgangsgleichspannung von V3 immer der Ausgangsspannung von V5 und der Arbeitspunktspannung entspricht. Die Verstärkungsänderung von V3 gleicht damit die Lichtstromänderung der Lampe aus. Da über den Additionswiderstand R3 die Verstärkerstufe V3 auch für das Wechselspannungsnutzsignal benutzt wird, ist das Nutzsignal in den Grenzen, in denen die Schaltung arbeitet, unabhängig vom Lampenstrom. R3 muß dabei R4 entsprechen.

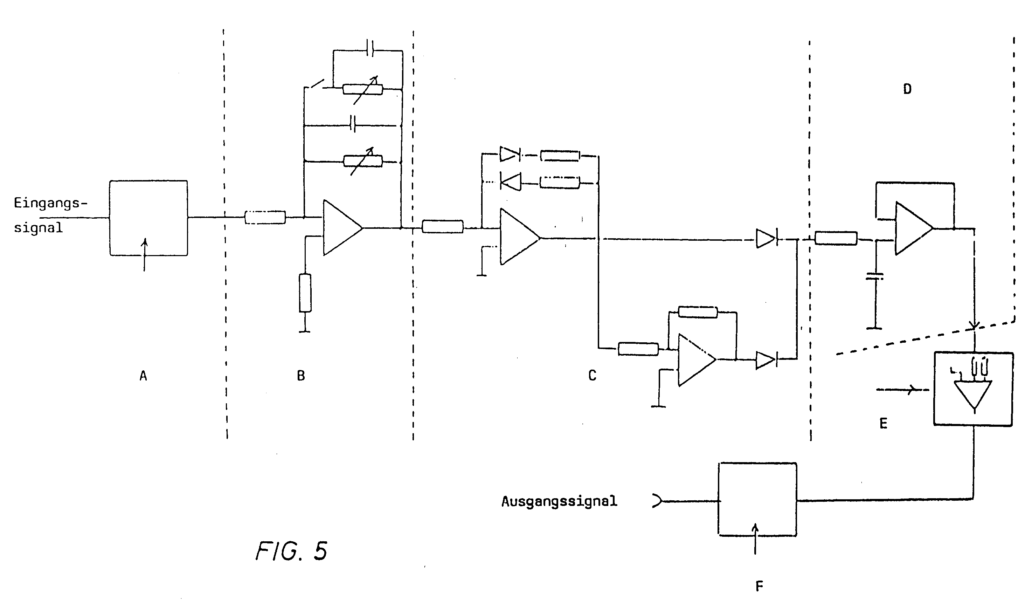

Wie in Figur 5 dargestellt, wird in der nachfolgenden Filterschaltung A das Signal zunächst durch ein auf die Modulationsfrequenz abstimmbares aktives Filter selektiv verstärkt.

Im nächsten Verstärker B können über veränderbare beziehungsweise umschaltbare Rückkopplungswiderstände Empfindlichkeitsbeziehungsweise Bereichseinstellungen vorgenommen werden. Anschließend wird das Wechselspannungssignal in einer auch für kleine Spannungen geeigneten Gleichrichterschaltung C gleichgerichtet. Die darauffolgende Impedanzstufe D setzt das nach erfolgter Glättung hochohmige Signal in ein niederohmiges Ausgangssignal um. Eine anschließende Addierstufe E ist nur notwendig, wenn ein zur Rauschunterdrückung des Fotoempfängerrauschens vollkommen gleichwertiger zweiter Kanal mit unmittelbar am ersten Fotoempfänger angebrachten abgedunkelten zweiten Fotoempfänger vorgesehen ist. Das Signal aus diesem Kanal wird um 180° phasengedreht in der Addierstufe zum ersten Signal addiert. Das Signal-Rausch-Verhältnis kann auch noch entscheidend durch den Einsatz eines phasensynchronen Selektiv-Verstärkers (Lock-in Verstärker) in der Eingangsstufe verbessert werden. Diese beiden Maßnahmen sind in den Figuren 4 und 5 nicht enthalten. Als letzte Signalverarbeitungsstufe ist eine Logarithmierstufe F eingesetzt.

Das jetzt zur Verfügung stehende Signal ist ein relatives Maß für die Dicke des Schichtträgers d. Ist die Apparatur einmal kalibriert, können fortan laufend Schichtdicken in absoluten Einheiten gemessen werden. Die erhaltenen Meßwerte können auf einem X-Y-t-Schreiber registriert werden und bilden so ein lückenloses Meßprotokoll.

Da alle verwendeten Bauelemente preiswert auf dem Markt erhältlich sind, ist auf diese Weise eine rationell durchzuführende on-line-Schichtdickenmessung gegeben, die auch geringe Schichtdickenschwankungen zuverlässig mißt.

**Patentansprüche**

1. Vorrichtung zur on-line-Messung der Dicke von Schichtträgern mit opto-elektronischen Mitteln, bestehend aus
   - einer Lichtquelle (2) zur Emission modulierten Lichtes
   - einem Fotoempfänger (3) zur Registrierung des vom Schichtträger (1) durchgelassenen Lichtes von der Lichtquelle (2), wobei sich im Vewendungsfall der Schichtträger bewegbar zwischen Lichtquelle und Fotoempfänger befindet
   - einer Auswerteelektronik (5) zur Bestimmung der Dicke des Schichtträgers aus dem von dem Fotoempfänger registrierten Signal, wobei der Schichtträger im sichtbaren Wellenlängengebiet transparent sein soll und im UV-Bereich eine starke Absorption aufweisen soll, dadurch gekennzeichnet, daß die Vorrichtung so ausgelegt ist, daß der im Verwendungsfall zu vermessende Schichtträger über dessen gesamte Breite im Wellenlängenbereich kleiner als 360 nm mit parallelem oder leicht konvergentem Licht durchstrahlbar ist,

zwischen Schichtträger und Fotoempfänger mindestens eine Lochblende (4) zur Konstanthaltung der vom Fotoempfänger registrierten Lichtmenge bei leichter Änderung des Abstands von Schichtträger zu Fotoempfänger angeordnet ist, die Anzahl der Fotoempfänger so bemessen sein soll, daß die gesamte Bahnbreite des im Verwendungsfall zu vermessenden Schichtträgers erfaßbar ist,

eine Auswerteelektronik (5) zur Umformung des im Fotoempfänger (3) entstehenden Stromsignals in ein Spannungssignal durch eine 0-Punkt-geregelte SpannungswandlerSchaltung, zur anschließenden Verstärkung in einem Spannungsverstärker, zur Ablösung des verstärkten Signals durch ein elektronisches Filter von der Modulationsfrequenz, zur Gleichrichtung in einem Gleichrichter und gegebenenfalls zur Logarithmierung in einer weiteren elektronischen Stufe vorgesehen ist.

**2.** Vorrichtung-nach Anspruch 1, dadurch gekennzeichnet, daß das den Schichtträger durchstrahlende Licht im Wellenlängenbereich kleiner 300 nm liegt.

**3.** Vorrichtung nach den Ansprüchen 1 bis 2, dadurch gekennzeichnet, daß die Lichtquelle eine röhrenförmige Entladungslampe ist, welche senkrecht zur Bewegungsrichtung des Schichtträgers und parallel zur Schichtträgerebene ausrichtbar ist und daß auf der anderen Seite des Schichtträgers parallel zur Entladungslampe mehrere Fotoempfänger vorhanden sind.

**4.** Vorrichtung nach den Ansprüchen 1 bis 3, dadurch gekennzeichnet, daß das von der Lichtquelle (2) ausgehende Licht auf elektrischem, optischem oder mechanischem Weg mit einer Frequenz von 0,05 bis 25 kHz modulierbar ist.

**5.** Vorrichtung nach den Ansprüchen 1 bis 4, gekennzeichnet durch einen Eingangsverstärker (V1) in Kombination mit einem Integrationsverstärker (V2) als 0-Punkts-Regelglied zur Einspeisung des im Fotoempfänger (3(1)) entstehenden Stromsignals.

**6.** Vorrichtung nach den Ansprüchen 1 bis 5, dadurch gekennzeichnet, daß ein weiterer Fotoempfänger (3(2)) zur Beaufschlagung mit einem Teil des von der Lichtquelle (2) ausgehenden Lichtes vorgesehen ist, dessen Stromsignal in einen Verstärker (V5) einspeisbar ist, daß weiterhin ein R-C-Glied zur Ausfilterung der Modulations-Wechselspannung des vom Verstärker (V5) ausgehenden Signals und daß schließlich ein als Rückkopplungs-Widerstand dienender Transistor zur Beaufschlagung mit dem resultierenden Signal und zur Verstärkungsänderung, an einem weiteren Verstärker (V3) vorhanden ist.

**Claims**

**1.** A device for the on-line measurement of the thickness of film bases by optoelectronic means, comprising
- a light source (2) for the emission of modulated light
- a photoelectric receiver (3) to record that light from the light source (2) which is transmitted by the film base (1), the film base being movably situated, when in use, between the light source and the photoelectric receiver
- an evaluating electronic system (5) for the determination of the thickness of the film base from the signal recorded by the photoelectric receiver, the film base being intended to be transparent within the visible wavelength band and being intended to exhibit strong absorption within the UV band, wherein the device is designed so that the film base which is to be measured when in use is transparent over its entire width in the wavelength band shorter than 360 nm, with parallel or slightly convergent light,

at least one diaphragm (4) to keep the quantity of light recorded by the photoelectric receiver constant in the event of a slight change in the distance between the film base and the photoelectric receiver being disposed between the film base and the photoelectric receiver, the number of photoelectric receivers being intended to be such that the entire web width of the film base which is to be measured when in use can be encompassed, there being provided an evaluating electronic system (5) to modify the current signal produced in the photoelectric

6

receiver (3) into a voltage signal by an 0-point-controlled voltage transformer circuit, for subsequent amplification in a voltage amplifier, for the separation of the amplified signal, by an electronic filter, from the modulation frequency, for rectification in a rectifier and possibly for logarithmic conversion in a further electronic stage.

2. The device as claimed in claim 1, wherein the light passing through the film base is in the wavelength band shorter than 300 nm.

3. The device as claimed in claims 1 to 2, wherein the light source is a tubular discharge lamp, which can be oriented perpendicular to the direction of movement of the film base and parallel to the plane of the film base, and wherein a plurality of photoelectric receivers are provided on the other side of the film base, parallel to the discharge lamp.

4. The device as claimed in claims 1 to 3, wherein the light emanating from the light source (2) can be modulated by electrical, optical or mechanical means with a frequency of 0.05 to 25 kHz.

5. The device as claimed in claims 1 to 4, which comprises an input amplifier (V1) in combination with an integrating amplifier (V2) as an 0-point control element to feed in the current signal produced in the photoelectric receiver (3(1)).

6. The device as claimed in claims 1 to 5, wherein a further photoelectric receiver (3(2)) is provided, which is to be acted upon by a part of the light emanating from the light source (2) and the current signal of which can be fed into an amplifier (V5), wherein furthermore an R-C element for filtering out the modulating alternating voltage of the signal emanating from the amplifier (V5) is provided, and wherein finally a transistor, serving as feedback resistor, to be acted upon by the resultant signal and to change the amplification at a further amplifier (V3), is provided.

## Revendications

1. Dispositif de mesure "on line" de l'épaisseur de supports de couche par des moyens optoélectroniques, constitué
   - d'une source lumineuse (2) pour l'émission de lumière modulée,
   - d'un photorécepteur (3) pour l'enregistrement de la lumière de la source lumineuse (2) transmise par le support de couche (1), le support de couche, dans le cas de l'utilisation, se trouvant, mobile, entre la source lumineuse et le photorécepteur,
   - d'un dispositif électronique d'exploitation (5) pour la détermination de l'épaisseur du support de couche à partir du signal enregistré par le photorécepteur, le support de couche devant être transparent dans le visible et présenter une forte absorption dans l'ultraviolet,
   caractérisé par le fait qu'il est conçu de façon que le support de couche à mesurer dans le cas de l'utilisation puisse être traversé sur toute sa largeur par de la lumière parallèle ou légèrement convergente dans le domaine de longueurs d'onde situé au-dessous de 360 nm,
   qu'entre le support de couche et le photorécepteur est placé au moins un diaphragme (4) destiné à maintenir constante le quantité de lumière enregistrée par le photorécepteur en cas de léger changement de la distance entre le support de couche et le photorécepteur,
   que le nombre de photorécepteurs doit être choisi de façon que la largeur totale de bande du support de couche à mesurer dans le cas de l'utilisation puisse être saisie, qu'il est prévu un dispositif électronique d'exploitation (5) pour la transformation du signal de courant produit dans le photorécepteur (3) en un signal de tension par un dispositif convertisseur de tension à zéro régulé, pour l'amplification subséquente dans un amplificateur de tension, pour la séparation du signal amplifié de la fréquence de modulation par un filtre électronique, pour le redressement dans un redresseur et éventuellement pour la conversion logarithmique dans un autre étage électronique.

2. Dispositif selon la revendication 1, caractérisé par le fait que la lumière traversant le support de couche est située dans le domaine de longueurs d'onde au-dessous de 300 nm.

3. Dispositif selon les revendications 1 et 2, caractérisé par le fait que la source lumineuse est une lampe tubulaire à décharge qui peut être orientée perpendiculairement à la direction de mouvement et parallèlement au plan du support de couche, et que plusieurs photorécepteurs sont prévus parallèlement à cette lampe à décharge sur l'autre côté du support de couche.

4. Dispositif selon les revendications 1 à 3, caractérisé par le fait que la lumière émise par la source lumineuse (2) peut être modulée à une fréquence de 0,05 à 25 kHz par voie électrique, optique ou mécanique.

5. Dispositif selon les revendications 1 à 4, caractérisé par un amplificateur d'entrée (V1) associé à un amplificateur intégrateur (V2) comme organe régulateur de zéro pour l'introduction du signal de courant produit dans le photorécepteur (3(1)).

6. Dispositif selon les revendications 1 à 5, caractérisé par le fait qu'il est prévu un autre photorécepteur (3(2)) destiné à recevoir une partie de la lumière émise par la source lumineuse (2) et dont le signal de courant peut être introduit dans un amplificateur (V5), qu'il existe en outre un circuit R-C pour l'élimination par filtrage de la tension alternative de modulation du signal sortant de l'amplificateur (V5), et qu'il existe enfin un transistor servant de résistance de réaction destiné à recevoir le signal résultant et pour le changement d'amplificateur à un autre amplificateur (V3).

FIG.1

FIG.2

FIG. 3

FIG. 4

FIG. 5

Eingangssignal

Ausgangssignal

A          B          C          D          E          F

EP 0 304 793 B1